# EUROPÄISCHE PATENTSCHRIFT

(11) **EP 1 787 380 B1**
(45) Veröffentlichungstag und Bekanntmachung des Hinweises auf die Patenterteilung: **04.07.2012**
(21) Anmeldenummer: 05779616.1
(22) Anmeldetag: 23.08.2005
(51) Int. Cl.: H02K 9/18, H02K 9/04

(54) **SET AUS EINER MEHRZAHL VON KÜHLERMODULEN UND EINEM MASCHINENGEHÄUSE**
SET HAVING A PLURALITY OF COOLING MODULES AND A MACHINE HOUSING
ENSEMBLE DE PLUSIEURS MODULES DE REFROIDISSEURS ET D'UN BÔITIER DE MACHINE

(30) Priorität: 09.09.2004 US 608520 P
(43) Veröffentlichungstag der Anmeldung: 23.05.2007
(73) Patentinhaber: SIEMENS AKTIENGESELLSCHAFT, 80333 München (DE)
(72) Erfinder: RESSEL, Ekkehard, 91560 Heilsbronn (DE)
(86) Internationale Anmeldenummer: PCT/DE2005/001489
(87) Internationale Veröffentlichungsnummer: WO 2006/026952

(56) Entgegenhaltungen:
- WO-A-01/17094
- PATENT ABSTRACTS OF JAPAN Bd. 006, Nr. 111 (E-114), 22. Juni 1982 (1982-06-22) & JP 57 040344 A (MITSUBISHI ELECTRIC CORP), 5. März 1982 (1982-03-05)
- PATENT ABSTRACTS OF JAPAN Bd. 011, Nr. 145 (E-505), 12. Mai 1987 (1987-05-12) & JP 61 285039 A (HITACHI LTD), 15. Dezember 1986 (1986-12-15)
- PATENT ABSTRACTS OF JAPAN Bd. 010, Nr. 069 (E-389), 18. März 1986 (1986-03-18) & JP 60 219939 A (HITACHI SEISAKUSHO KK), 2. November 1985 (1985-11-02) in der Anmeldung erwähnt

## Beschreibung

Die Erfindung betrifft ein Set aus einer Mehtzahl

Ein elektrisches Aggregat und einem Maschinen gehänse, mit einem Kühler modul, einem Maschinen module ist bekannt aus der JP 60-219 939 A. Dort umfasst das elektrische Aggregat einen Wärmetauscher, welcher ausgehend von der ersten Kühlfluid-Verbindungszone bis hin zur zweiten Kühlfluid-Verbindungszone längs eines Zick-Zack-Weges durchströmt wird. Die Kühlung derartiger bekannter elektrischer Aggregate ist jeweils abgestimmt auf das eingesetzte Maschinenmodul. Sobald sich herausstellt, dass eine bestimmte Kühltechnik für das Maschinenmodul nicht ausreicht, muss das elektrische Aggregat hinsichtlich der Kühlung komplett umkonstruiert werden.

Die JP 60-219 939 A offenbart ein Set aus zwei Kuhlermodulen mit den Merkmalen der Zweiten und riesten Kühlvariante.

Es ist daher eine Aufgabe der vorliegenden Erfindung, ein Set der eingangs genannten Art derart auszugestalten, dass veränderten Kühl-Anforderungen mit verringertem baulichem und konstruktivem Aufwand begegnet werden kann.

Diese Aufgabe ist erfindungsgemäß gelöst durch ein Set nach Anspruch 1.

Die erste Kühlermodul-Variante ermöglicht eine offene Luftkühlung von beiden Enden der elektrischen Maschine her. Die zweite Kühlermodul-Variante ermöglicht eine geschlossene Luftkühlung mit einem Wärmetauscher von beiden Enden der elektrischen Maschine her. Die dritte Kühlermodul-Variante ermöglicht eine die elektrische Maschine längs durchströmende offene Luftkühlung. Die vierte Kühlermodul-Variante ermöglicht eine die elektrische Maschine längs durchströmende geschlossene Luftkühlung mit einem Wärmetauscher. In Abhängigkeit der Schutzart der elektrischen Maschine kann dann z. B. eine offene oder geschlossene Bauart der Kühlung gewählt werden. Eine geschlossene elektrische Maschine kann mit einem Luft-Luft-Wärmetauscher oder mit einem Luft-Wasser-Wärmetauscher betrieben werden. Die maximale Kühlleistung auf Basis VDE 0530 und damit die höchste Maschinenleistung wird mit einer offenen durchzugsbelüfteten sowie mit einer Luft-Wassergekühlten Maschine erreicht. Eine Luft-Luft-gekühlte Maschine bietet bei entsprechend reduzierter Leistung den Vorteil einer geschlossenen Bauart in Kombination mit der Luftkühlung. Elektrische Maschinen werden mit verschiedenen Polzahlen gefertigt und damit auf unterschiedliche Drehzahlen ausgelegt. Diese Maschinen können dann an einem Netz mit fester Drehzahl oder an einem Umrichter mit variabler Drehzahl betrieben werden. In Abhängigkeit der Polpaarzahl und bei Umrichterbetrieb auch abhängig vom gewünschten Drehzahlbereich kann es vorteilhaft sein, die Maschine mit dem Luftstrom von beiden Enden her oder von einem Ende zu kühlen. Dabei spielt auch der Luftwiderstand des Kühlermoduls eine wichtige Rolle. Erfindungsgemäß ist es möglich, je nach Kühlart, Polpaarzahl und Drehzahl mit ein und demselben Maschinengehäuse die effizienteste Kühlungsvariante zu wählen. Kühlermodule mit Kühlluftführungen, die die dritte Kühlfluid-Verbindungszone zum Maschinengehäuse nicht benötigen, dichten diese einfach mit der jeweiligen Dichteinrichtung ab, sodass eine Kühlluftströmung alleine durch die beiden verbleibenden Kühlfluid-Verbindungszonen zum Maschinengehäuse erfolgt.

Erfindungsgemäß wurde erkannt, dass durch die spezielle Ausgestaltung des Maschinengehäuses des Maschinenmoduls mit drei Kühlfluid-Verbindungszonen verschiedene Varianten der Kühlluftführung im Maschinengehäuse realisiert werden können. Diese verschiedenen Kühlluft-Führungsvarianten können dann mit entsprechenden Kühlermodulen kombiniert werden, sodass individuellen Kühlanforderungen Rechnung getragen werden kann. Ein elektrische Aggregat lässt sich daher mit verschiedenen Kühltechniken des jeweiligen Kühlmoduls ausrüsten, ohne dass hierzu das Maschinenmodul, insbesondere ohne dass das Maschinengehäuse, baulich verändert werden muss. Es sind beispielsweise folgende Kühltechniken mit dem gleichen Maschinengehäuse lediglich durch Anpassung des Kühlmoduls realisierbar: Offene Luftkühlung von beiden Enden der elektrischen Maschine her, geschlossene Luftkühlung mit einem Luft-Luft-Wärmetauscher von beiden Enden der elektrischen Maschine her, geschlossene Luftkühlung mit einem Luft-Wasser-Wärmetauscher von beiden Enden der elektrischen Maschine her, offene, die elektrische Maschine längs durchströmende Luftkühlung, geschlossene, die elektrische Maschine längs durchströmende Luftkühlung mit einem Luft-Luft-Wärmetauscher, geschlossene, die elektrische Maschine längs durchströmende Luftkühlung mit einem Luft-Wasser-Wärmetauscher. Das Kühlermodul hat entweder ausschließlich die Funktion einer Kühlfluid-Führung oder beinhaltet aktive Kühlelemente wie z. B. Wärmetauscher. Es ist ein standardisiertes Maschinengehäuse für alle diese Kühltechniken einsetzbar. Als elektrische Maschine kann ein Elektromotor oder alternativ auch ein Generator zum Einsatz kommen.

Bei dem Maschinengehäuse ist eine effektive Kühlung des Stators gegeben.

Das Maschinengehäuse ermöglicht eine Kühlfluidführung, bei der Kühlfluid nicht nur von den Enden der Maschine her diesem zu- oder von diesem abgeführt wird, sondern auch über einen Mittelabschnitt des Maschinengehäuses. Diesem Mittelabschnitt des Maschinengehäuses kann über die umlaufende bzw. tangentiale Kühlfluid-Strömungskomponente das Kühlfluid zugeführt werden. Auf diese Weise lässt sich mit ein und demselben Maschinengehäuse eine Kühlung von beiden Enden her einerseits sowie eine Kühlung, welche die Maschine von einer Seite durchströmt, andererseits realisieren.

Die Stege bieten eine konstruktiv einfache Möglichkeit, eine umlaufende Kühlfluid-Strömung zu gewährleisten.

Durchtrittsöffnungen in den Stegen nach Anspruch 2 ergeben eine definierte tangentiale Kühlfluidführung.

Luft als Kühlfluid stellt bei der Kühlung innerhalb des Maschinengehäuses die einfachste Variante dar. Alternativ ist es möglich, auch ein anderes Kühlfluid, insbesondere ein von Luft verschiedenes Kühlgas, einzusetzen. Auch der Einsatz einer Kühlflüssigkeit ist prinzipiell möglich.

Ein Lüfter nach Anspruch 3 ist dann von Vorteil, wenn die Rotorbewegung selbst keine oder keine ausreichende Vorgabe der gewünschten Strömungsrichtung des Kühlfluids liefert.

Diese Aufgabe ist erfindungsgemäß gelöst durch ein Set aus einer Mehrzahl von Kühlermodulen nach Anspruch 9.

Die erste Kühlermodul-Variante ermöglicht eine offene Luftkühlung von beiden Enden der elektrischen Maschine her. Die zweite Kühlermodul-Variante ermöglicht eine geschlossene Luftkühlung mit einem Wärmetauscher von beiden Enden der elektrischen Maschine her. Die dritte Kühlermodul-Variante ermöglicht eine die elektrische Maschine längs durchströmende offene Luftkühlung. Die vierte Kühlermodul-Variante ermöglicht eine die elektrische Maschine längs durchströmende geschlossene Luftkühlung mit einem Wärmetauscher. In Abhängigkeit der Schutzart der elektrischen Maschine kann dann z. B. eine offene oder geschlossene Bauart der Kühlung gewählt werden. Eine geschlossene elektrische Maschine kann mit einem Luft-Luft-Wärmetauscher oder mit einem Luft-Wasser-Wärmetauscher betrieben werden. Die maximale Kühlleistung auf Basis VDE 0530 und damit die höchste Maschinenleistung wird mit einer offenen durchzugsbelüfteten sowie mit einer Luft-Wassergekühlten Maschine erreicht. Eine Luft-Luft-gekühlte Maschine bietet bei entsprechend reduzierter Leistung den Vorteil einer geschlossenen Bauart in Kombination mit der Luftkühlung. Elektrische Maschinen werden mit verschiedenen Polzahlen gefertigt und damit auf unterschiedliche Drehzahlen ausgelegt. Diese Maschinen können dann an einem Netz mit fester Drehzahl oder an einem Umrichter mit variabler Drehzahl betrieben werden. In Abhängigkeit der Polpaarzahl und bei Umrichterbetrieb auch abhängig vom gewünschten Drehzahlbereich kann es vorteilhaft sein, die Maschine mit dem Luftstrom von beiden Enden her oder von einem Ende zu kühlen. Dabei spielt auch der Luftwiderstand des Kühlermoduls eine wichtige Rolle. Erfindungsgemäß ist es möglich, je nach Kühlart, Polpaarzahl und Drehzahl mit ein und demselben Maschinengehäuse die effizienteste Kühlungsvariante zu wählen. Kühlermodule mit Kühlluftführungen, die die dritte Kühlfluid-Verbindungszone zum Maschinengehäuse nicht benötigen, dichten diese einfach mit der jeweiligen Dichteinrichtung ab, sodass eine Kühlluftströmung Eine Ausgestaltung von Kühlermodul-Varianten nach Anspruch 4 ist für die preiswerte Herstellung dieser Kühlermodul-Varianten besonders vorteilhaft. Alternativ ist es möglich, zur Zufuhr von Kühlluft an das Maschinengehäuse einen Rohranschluss vorzusehen. Bei der einseitigen, also die elektrische Maschine längs durchströmenden Luftzufuhr wird die dritte Kühlfluid-Verbindungszone mit Hilfe der Dichteinrichtung verschlossen. Bei der Luftkühlung von beiden Enden her erfolgt die Luftzufuhr über Rohranschlüsse an die erste und zweite Kühlfluid-Verbindungszone und der Luftabtransport über den Rohranschluss an der dritten Kühlfluid-Verbindungszone. Wärmetauscher nach den Ansprüchen 5 und 6 reichen für viele auch anspruchsvollere Kühlanforderungen aus. Ausführungsbeispiele der Erfindung werden nachfolgend anhand der Zeichnung näher erläutert. In dieser zeigen:
- FIG 1: perspektivisch im Ausschnitt ein elektrisches Aggregat mit einem Maschinenmodul und einer ersten Kühlermodul-Variante, die Teil eines Sets aus einer Mehrzahl von Kühlermodulen zum Zusammenbau mit dem Maschinenmodul darstellt;
- FIG 2: perspektivisch im Ausschnitt ein weiteres elektrisches Aggregat mit dem Maschinenmodul nach FIG 1 und einer zweiten Kühlermodul-Variante des Kühlermodul-Sets, welche einen Luft-Luft-Wärmetauscher aufweist;
- FIG 3-6: perspektivisch im Ausschnitt das Maschinenmodul nach FIG 1 mit weiteren Kühlermodul-Varianten; und
- FIG 7: perspektivisch vergrößert einen Ausschnitt eines Maschinengehäuses des Maschinenmoduls.

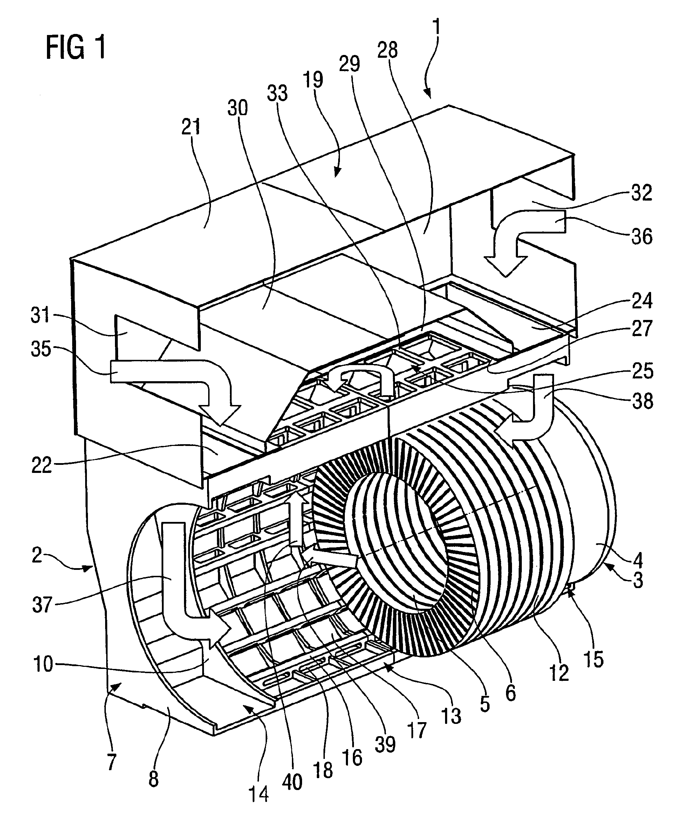

FIG 1 zeigt einen perspektivischen Ausschnitt eines Antriebsaggregats 1 als Beispiel für ein elektrisches Aggregat. Es handelt sich hierbei um eine kreislaufgekühlte Maschine. Das elektrische Aggregat 1 hat ein in FIG 1 unten dargestelltes Motormodul 2 als Beispiel für ein Maschinenmodul. Zu diesem gehört ein Elektromotor 3 als Beispiel für eine elektrische Maschine, von dem in FIG 1 nur ein Stator 4, und zwar die rechte gebrochene Hälfte von diesem, dargestellt ist. Der Stator 4 ist als Blechpaket ausgeführt. Wie dies an sich bekannt ist, weist der Stator 4 eine Mehrzahl von Durchgangsöffnungen 5 auf, durch die eine radiale Fluid-Durchströmung des Stators 4 möglich ist. Entsprechende und an sich bekannte Durchgangsöffnungen hat auch der nicht dargestellte Rotor. Ferner weisen sowohl der Stator 4 als auch der Rotor in axialer Richtung verlaufende Durchgänge 6 auf, durch die ebenfalls eine Fluid-Strömung ermöglicht ist.

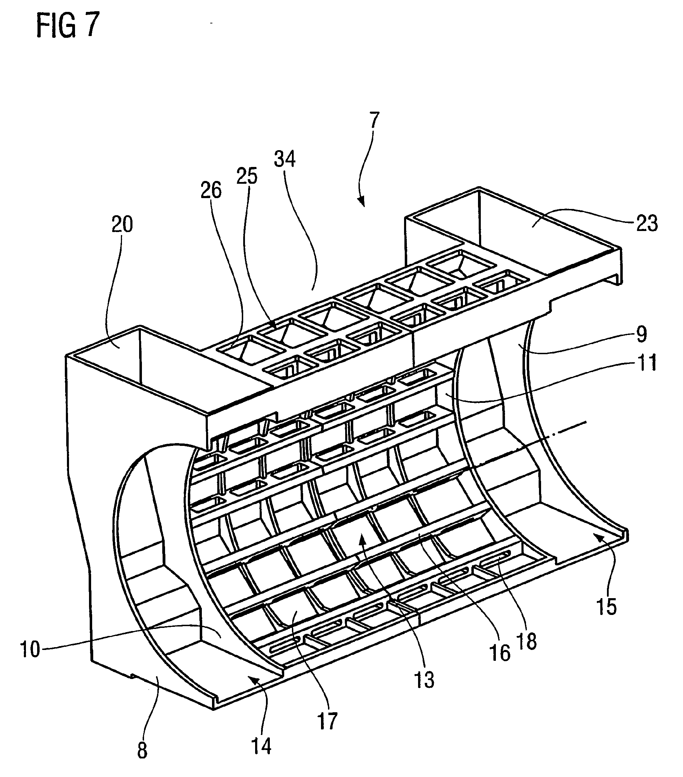

Der Elektromotor 3 ist aufgenommen in einem Maschinen- bzw. Motorgehäuse 7. Von diesem ist in der Zeichnung lediglich eine vertikal längs geschnittene hintere Hälfte dargestellt. Das Maschinengehäuse 7 hat eine in der Zeichnung linke erste Stirnwand 8 und eine in der Zeichnung rechte zweite Stirnwand 9. Der ersten Stirnwand 8 benachbart und zu dieser beabstandet hat das Maschinengehäuse 7 eine in der Zeichnung linke erste Zwischenwand 10. Der zweiten Stirnwand 9 benachbart hat das Maschinengehäuse 7 eine in FIG 7 rechte zweite Zwischenwand 11. Bei montiertem Elektromotor dichtet jeweils ein nicht dargestelltes Lagerschild den Elektromotor 3 zu den Stirnwänden 8, 9 hin ab, sodass stirnseitig, also an den beiden Enden des Elektromotors 3, kein Fluid-Durchtritt in das oder aus dem Maschinengehäuse 7 möglich ist. Bei montiertem Elektromotor 3 liegt ferner eine Mantelwand 12 des Stators 4 an den Zwischenwänden 10, 11 an. Eine Abdichtung des Statormantels an den Gehäusewänden erfolgt über nicht dargestellte Leitwände. Bei montiertem Elektromotor 3 ist das Maschinengehäuse 7 also unterteilt in einen axialen Mittelabschnitt 13 zwischen den beiden Zwischenwänden 10, 11, in einen in der Zeichnung links dargestellten ersten Randabschnitt 14 zwischen der ersten Stirnwand 8 und der ersten Zwischenwand 10 und in einen in FIG 7 rechts dargestellten zweiten Randabschnitt 15 zwischen der zweiten Zwischenwand 11 und der zweiten Stirnwand 9.

Im Bereich des Mittelabschnitts 13 hat das Maschinengehäuse 7 senkrecht zu seiner Längsachse einen achteckigen Querschnitt. Im Mittelabschnitt 13 liegt die Mantelwand 12 des Stators 4 über axial zwischen den Zwischenwänden 10, 11 verlaufende Stege 16, die fest mit einer Gehäusemantelwand 17 des Maschinengehäuses 7 verbunden sind, am Maschinengehäuse 7 an. Der Stator 4 ist am Außenumfang an den Stegen 16 fixiert. Senkrecht zu ihrer Erstreckungsrichtung und parallel zum benachbarten Abschnitt der Gehäusewand 17 weisen die Stege 16 Fluid-Durchtrittsöffnungen 18 auf. Im dargestellten Ausführungsbeispiel sind pro Steg 16 je sechs Durchtrittsöffnungen 18 vorgesehen.

In FIG 1 oberhalb des Maschinengehäuses 7 ist ein Kühlermodul 19 des elektrischen Aggregats 1 angeordnet und fest mit dem Maschinenmodul 2 verbunden. Über eine erste Kühlfluid-Verbindungszone 20 in einem in der Zeichnung oberen Abschnitt der dem Kühlermodul 19 zugewandten Gehäusewand 17, die kühlerseitig durch eine Kühlfluid-Zuführöffnung gebildet ist, steht das Innere eines Kühlergehäuses 21 des Kühlermoduls 19 mit dem ersten Randabschnitt 14 des Maschinengehäuses 7 in Fluidverbindung. Hierzu hat das Kühlergehäuse 21 eine in FIG 1 bodenseitige Durchtrittsöffnung 22, die mit der ersten Kühlfluid-Verbindungszone 20 des Maschinengehäuses 7 fluchtet. Weiterhin hat das Maschinengehäuse 7 eine zweite Kühlfluid-Verbindungszone 23, die motorseitig ebenfalls durch eine Kühlfluid-Durchtrittsöffnung in den dem Kühlermodul 19 zugewandten Gehäusewandabschnitt des Maschinengehäuses 7 gebildet ist. Über die zweite Kühlfluid-Verbindungszone 23 steht der zweite Randabschnitt 15 des Maschinengehäuses 7 mit dem Kühlergehäuse 21 in Fluidverbindung. Hierzu hat das Kühlergehäuse 21 eine weitere, in FIG 1 rechte bodenseitige Durchtrittsöffnung 24. Ferner hat das Maschinengehäuse 7 in den dem Kühlermodul 19 zugewandten Gehäusewandabschnitt eine dritte Kühlfluid-Verbindungszone 25. Diese liegt zwischen den ersten beiden Kühlfluid-Verbindungszonen 20, 23. Die dritte Kühlfluid-Verbindungszone ist motorseitig im in der Zeichnung oberen, also dem Kühlergehäuse 21 zugewandten Wandabschnitt des im Querschnitt achteckigen Mittelabschnitts 13 des Maschinengehäuses 7 ausgebildet und unterteilt in eine Mehrzahl, im dargestellten Ausführungsbeispiel in insgesamt achtzehn, von in einem Raster angeordneten quadratischen Durchtrittsöffnungen 26.

Über die dritte Kühlfluid-Verbindungszone 25 steht der Mittelabschnitt 13 mit dem Inneren des Kühlergehäuses 21 in Fluidverbindung. Hierzu hat das Kühlergehäuse 21 bodenseitig eine mittlere Durchtrittsöffnung 27 zwischen den Durchtrittsöffnungen 22 und 24.

Das Innere des Kühlergehäuses 21 ist unterteilt in einen ersten, in FIG 1 oberen Kühlergehäuseraum 28 und in einen zweiten, in FIG 1 unten mittig dargestellten zweiten Kühlergehäuseraum 29. Die beiden Kühlergehäuseräume 28, 29 sind fluiddicht voneinander durch eine podestförmige Trennwand 30 abgetrennt. Letztere erstreckt sich von einem bodenseitigen Zwischensteg des Kühlergehäuses 21, der zwischen den Durchtrittsöffnungen 22 und 27 angeordnet ist, bis hin zu einem weiteren bodenseitigen Zwischensteg des Kühlergehäuses 21 zwischen den Durchtrittsöffnungen 27 und 24. Der erste Kühlergehäuseraum 28 steht über die Durchtrittsöffnungen 22 und 24 mit der ersten Kühlfluid-Verbindungszone 20 einerseits und der zweiten Kühlfluid-Verbindungszone 23 andererseits in Fluidverbindung. Der zweite Kühlergehäuseraum 29 steht über die Durchtrittsöffnung 27 mit der dritten Kühlfluid-Verbindungszone 25 in Fluidverbindung. Über stirnseitig gegenüberliegend angeordnete Eintrittsöffnungen 31, 32 steht der erste Kühlergehäuseraum 28 mit der Umgebung des Kühlermoduls 19 in Fluidverbindung. Über eine bodenseitige Austrittsöffnung 33 steht der zweite Kühlergehäuseraum 29 mit der Umgebung des Kühlermoduls 19 in Verbindung. Die Austrittsöffnung 33 fluchtet mit einer Aussparung 34 im dem Kühlermodul 19 zugewandten Gehäuseabschnitt des Maschinengehäuses 7, die sich aufgrund des achteckigen Querschnitts des Mittelabschnitts 13 ergibt.

Eine zweiseitige offene Luftkühlung des Elektromotors 3 im elektrischen Aggregat 1 nach FIG 1 arbeitet folgendermaßen:
Luft wird über die Eintrittsöffnungen 31, 32 in den ersten Kühlergehäuseraum 28 des Kühlergehäuses 21 eingesaugt, wie durch Strömungsrichtungspfeile 35, 36 in FIG 1 angedeutet. Eine Saugwirkung, die dieses Einsaugen bewirkt, entsteht durch die Drehung des Rotors des Elektromotors 3 im Stator 4. Die eingesaugte Luft durchtritt die erste Kühlfluid-Verbindungszone 20 und die zweite Kühlfluid-Verbindungszone 23, tritt also einerseits über die Durchtrittsöffnungen 22 und 20 in den ersten Randabschnitt 14 des Maschinengehäuses 7 und andererseits über die Durchtrittsöffnungen 24 und 23 in den zweiten Randabschnitt 15 des Maschinengehäuses 7 ein. Von dort tritt die Kühlluft, wie durch Strömungsrichtungspfeile 37, 38 angedeutet in den Mittelabschnitt 13 des Maschinengehäuses 7 ein. Hierbei strömt Luft von beiden Enden des Elektromotors 3 her durch die entsprechenden Durchtrittsöffnungen und Durchgänge des Rotors sowie durch die Durchgangsöffnungen 5 und die Durchgänge 6 des Stators 4. Es handelt sich hierbei also um eine zweiseitige Kühlung des Elektromotors 3. Ferner streicht z. B. die aus dem Stator 4 austretende Kühlluft außen an der Mantelwand 12 des Stators 4 vorbei. Aufgrund der Stege 16 ist die Mantelwand 12 von der Gehäusewand 17 beabstandet, sodass zwischen der Mantelwand 12 und der Gehäusewand 17 eine Fluid-Strömung möglich ist. Hierdurch werden der Rotor und der Stator 4 effizient luftgekühlt. Im Mittelabschnitt 13 kann die Kühlluft durch die Durchtrittsöffnungen 18 in den Stegen 16 hin zu den Durchtrittsöffnungen 26 der dritten Kühlfluid-Verbindungszone 25 strömen, wie durch Strömungsrichtungspfeile 39, 40 angedeutet. Die Durchtrittsöffnungen 18 in den Stegen 16 erlauben also eine umlaufende bzw. tangentiale Kühlluft-Strömung zwischen der Mantelwand 12 und der Gehäusewand 17. Von der dritten Kühlfluid-Verbindungszone 25 tritt die die Abwärme abtransportierende Kühlluft in den zweiten Kühlergehäuseraum 29 ein und aus der Austrittsöffnung 33 aus diesem über die Aussparung 34 nach außen hin wieder aus.

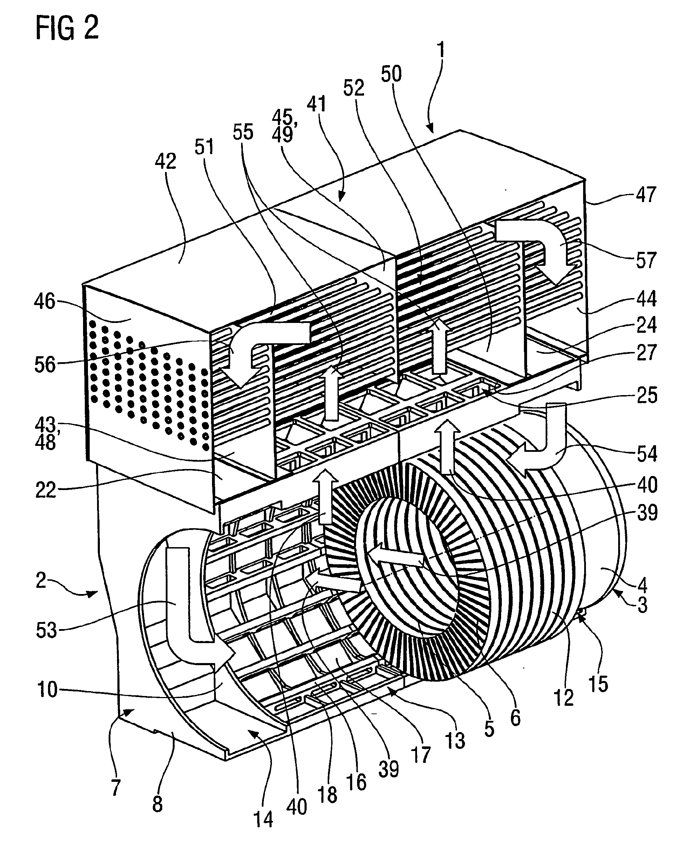

FIG 2 zeigt das Maschinenmodul 2 mit einer zweiten Variante eines Kühlermoduls 41. Letzteres wird nachfolgend nur dort beschrieben, wo es sich vom Kühlermodul 19 unterscheidet. Komponenten, die denjenigen entsprechen, die vorstehend schon unter Bezugnahme auf FIG 1 erläutert wurden, tragen die gleichen Bezugsziffern und werden nicht nochmals im Einzelnen diskutiert.

Ein Kühlergehäuse 42 des Kühlermoduls 41 ist unterteilt in einen ersten Kühlergehäuseabschnitt mit zwei Randabschnitten 43, 44 einerseits und einen zweiten Kühlergehäuseabschnitt 45 andererseits. Die Randabschnitte 43, 44 des Kühlergehäuses 42 sind in FIG 2 oberhalb der Randabschnitte 14, 15 des Maschinengehäuses 7 angeordnet. Über die Durchtrittsöffnung 22 steht der Randabschnitt 43 mit der Durchtrittsöffnung der ersten Kühlfluid-Verbindungszone 20 des Maschinengehäuses 7 in Fluidverbindung. Über die Durchtrittsöffnung 24 steht der Randabschnitt 44 mit der Durchtrittsöffnung der zweiten Kühlfluid-Verbindungszone 23 des Maschinengehäuses 7 in Fluidverbindung. Über die Durchtrittsöffnung 27 steht der zweite Kühlergehäuseabschnitt 45 mit den Durchtrittsöffnungen 26 der dritten Kühlfluid-Verbindungszone 25 des Maschinengehäuses 7 in Fluidverbindung.

Parallel zu Stirnwänden 46, 47 des Kühlergehäuses 42, die in FIG 2 links und rechts dargestellt sind, sind im Inneren des Kühlergehäuses 42 drei Tragwände 48, 49, 50 angeordnet. Die erste, in FIG 2 links dargestellte Tragwand 48 ist bodenseitig an einem Tragsteg des Kühlergehäuses 42, der zwischen den Durchtrittsöffnungen 22 und 27 angeordnet ist, montiert. Die Tragwand 48 teilt den in FIG 2 linken Randabschnitt 43 vom zweiten Kühlergehäuseabschnitt 45 ab. Diese Abteilung ist nicht vollständig, da sich die Tragwand 48 nicht bis zur in FIG 2 oben dargestellten Gehäusewand des Kühlergehäuses 42 erstreckt. Die zweite Tragwand 49 ist an der in FIG 2 oben dargestellten Wand des Kühlergehäuses 42 im zweiten Kühlergehäuseabschnitt 45 montiert. Die zweite Tragwand 49 erstreckt sich nicht bis zum Boden des Kühlergehäuses 42, sodass die Tragwand 49 im zweiten Kühlergehäuseabschnitt 45 keine Barriere für Kühlfluid darstellt. Die dritte Tragwand 50 ist an einem bodenseitigen Tragsteg des Kühlergehäuses 42, der zwischen den Durchtrittsöffnungen 27 und 24 angeordnet ist, montiert und entspricht, was ihre Erstreckung angeht, der ersten Tragwand 48. Die dritte Tragwand 50 stellt wie die erste Tragwand 48 eine für Kühlfluid überwindbare Unterteilung dar zwischen dem zweiten Kühlergehäuseabschnitt 45 und dem in FIG 2 rechten Randabschnitt 44.

Von den Stirnwänden 46, 47 und den Tragwänden 48 bis 50 getragen werden Kühlluft-Röhren 51 für sekundäre Kühlluft, die das Kühlergehäuse 42 parallel zur Achse des Elektromotors 3 durchlaufen. Insgesamt liegen beim Ausführungsbeispiel nach FIG 2 achtzig Kühlluft-Röhren 51 vor. Diese bilden einen Luft-Luft-Wärmetauscher 52.

Beim elektrischen Aggregat 1 nach FIG 2 erfolgt eine zweiseitige, geschlossene Luft-Kreislaufkühlung folgendermaßen:
Primäre Kühlluft tritt über die erste Kühlfluid-Verbindungszone 20 und die zweite Kühlfluid-Verbindungszone 23 in das Maschinengehäuse 7 ein, wie in FIG 2 durch Strömungsrichtungspfeile 53, 54 angedeutet. Der weitere Kühlluftstrom im Maschinengehäuse 7 beim elektrischen Aggregat 1 nach FIG 2 entspricht dem Kühlluftstrom bei der Kühlung des elektrischen Aggregats 1 nach FIG 1, wie durch die Strömungsrichtungspfeile 39, 40 angedeutet. Nach dem Durchtritt durch die dritte Kühlfluid-Verbindungszone 25 tritt die Wärme abtransportierende Kühlluft in den zweiten Kühlergehäuseabschnitt 45 des Kühlergehäuses 42 ein, wie durch Strömungsrichtungspfeile 55 angedeutet. Im zweiten Kühlergehäuseabschnitt 45 und in den beiden Randabschnitten 43, 44 des ersten Kühlergehäuseabschnitts des Kühlergehäuses 42 erfolgt nun ein Wärmetausch von der wärmeabgebenden primären Kühlluft an die wärmeaufnehmende sekundäre Kühlluft, die durch die Kühlluft-Röhren 51 strömt. Die primäre Kühlluft überwindet dabei die Trennwände 48, 50 und strömt wiederum in Richtung der ersten Kühlfluid-Verbindungszone 20 einerseits und der zweiten Kühlfluid-Verbindungszone 23 andererseits, wie durch Strömungsrichtungspfeile 56, 57 angedeutet. Hierdurch wird der Kühlkreislauf der primären Kühlluft komplettiert. Die Strömungsrichtung dieses Kühlkreislaufes ergibt sich aufgrund der Saugwirkung des Elektromotors 3.

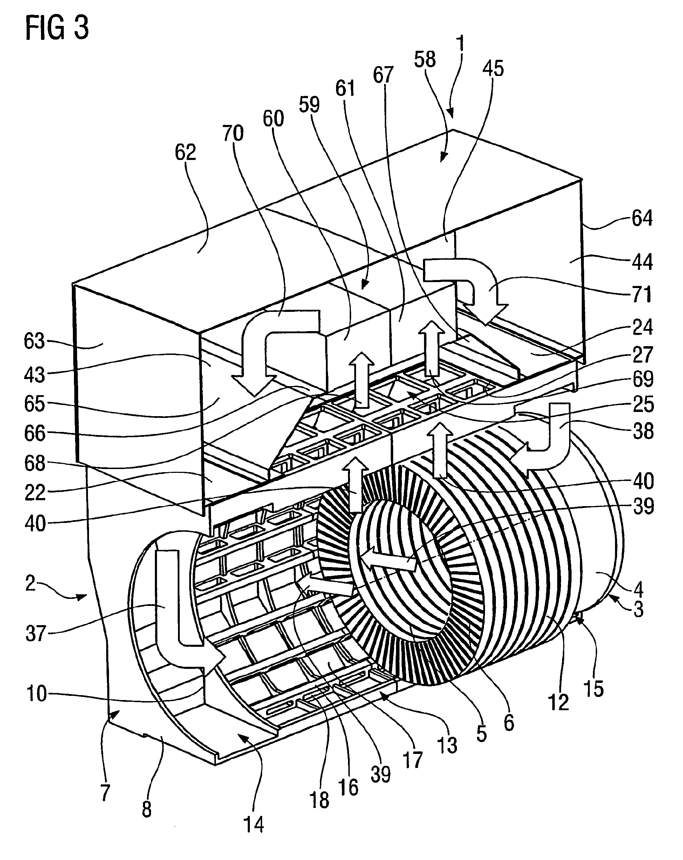

Nachfolgend wird unter Bezugnahme auf die FIG 3 eine weitere Variante eines Kühlermoduls 58 beschrieben. Eine Beschreibung erfolgt nur dort, wo sich das Kühlermodul 58 vom Kühlermodul 41 nach FIG 2 unterscheidet. Komponenten, die denjenigen entsprechen, die vorstehend schon unter Bezugnahme auf die FIG 1 und 2 erläutert wurden, tragen die gleichen Bezugsziffern und werden nicht nochmals im Einzelnen diskutiert.

Anstelle eines Luft-Luft-Wärmetauschers weist das Kühlermodul 58 einen Luft-Wasser-Wärmetauscher 59 auf. Dieser hat zwei Lamellen-Module 60, 61, die in FIG 3 schematisch als Blöcke mit rechteckigem Querschnitt dargestellt sind. Von Kühlwasser durchströmte Kühl-Lamellen der Lamellen-Module 60, 61 sind, wie dies z. B. von Kraftfahrzeug-Kühlern bekannt ist, als flache Strukturen ausgebildet, die allesamt im Wesentlichen parallel zu einer Haupterstreckungsebene ausgerichtet sind. Diese Haupterstreckungsebene steht gleichzeitig senkrecht auf dem Boden eines Kühlergehäuses 62 des Kühlermoduls 58 und andererseits senkrecht auf Stirnwänden 63, 64 des Kühlergehäuses 62, die in FIG 3 links und rechts dargestellt sind. Durch diese Ausrichtung der Lamellen ist ein möglichst unbehindertes Strömen der primären Kühlluft gegeben. Der Wasser-Wärmetauscher 59 wird von einer podestförmigen Tragwand 65 getragen. Eine Auflagewand 66 der Tragwand 65, auf der der Wasser-Wärmetauscher 59 aufliegt, ist luftdurchlässig ausgeführt, weist also Durchtrittsöffnungen für die primäre Kühlluft auf.

Diese Durchtrittsöffnungen unterscheiden die Tragwand 65 von der Trennwand 30 im Kühlergehäuse 21 des Kühlermoduls 19 nach FIG 1. Ansonsten entspricht die Form sowie die Montage der Tragwand 65 derjenigen der Trennwand 30. Die Tragwand 65 teilt einen ersten Kühlergehäuseabschnitt des Kühlergehäuses 62 mit den Randabschnitten 43, 44 von einem zweiten, mittleren Kühlergehäuseabschnitt 67 ab, der in FIG 3 nach oben durch die Tragwand 65 begrenzt ist.

Eine zweiseitige, geschlossene Luft-Wasserkühlung funktioniert bei der Kühlermodul-Variante nach FIG 3 folgendermaßen:
Die primäre Kühlluftströmung im Maschinengehäuse 7 entspricht derjenigen, die im Zusammenhang mit dem Kühlermodul 41 nach FIG 2 beschrieben wurde. Aus der dritten Kühlfluid-Verbindungszone 25 tritt die erwärmte Kühlluft in den zweiten Kühlergehäuseabschnitt 67 des Kühlergehäuses 62 ein und von dort durch die Auflagewand 66 in die Lamellen-Module 60, 61, wie durch Strömungsrichtungspfeile 68, 69 angedeutet. In den Lamellen-Modulen 60, 61 gibt die Kühlluft ihre Wärme an das durch die Lamellen strömende Kühlwasser des Wasser-Wärmetauschers 59 ab. Aus den Lamellen-Modulen 60, 61 strömt die abgekühlte Kühlluft in die Randabschnitte 43, 44 des Kühlergehäuses 62 und von dort wiederum in Richtung der Durchtrittsöffnungen 22, 24, wie durch Strömungsrichtungspfeile 70, 71 angedeutet.

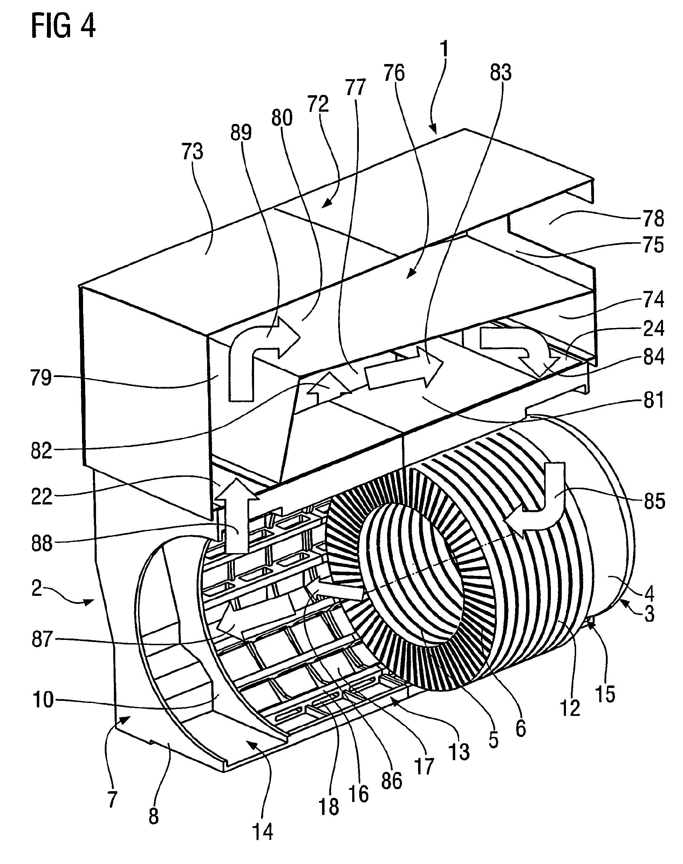

Nachfolgend wird anhand FIG 4 eine dritte Variante eines Kühlermoduls 72 beschrieben, welches an das Maschinenmodul 2 zur Vervollständigung eines elektrischen Aggregats 1 anstelle der Kühlermodule 19, 41 und 58 montiert werden kann. Komponenten des Kühlermoduls 72, die denjenigen entsprechen, die vorstehend bereits im Zusammenhang mit den FIG 1 bis 3 erläutert wurden, tragen die gleichen Bezugsziffern und werden nicht nochmals im Einzelnen diskutiert. Ein Kühlergehäuse 73 des Kühlermoduls 72 ist unterteilt in einen ersten, bodenseitigen Kühlergehäuseraum 74 und in einen zweiten, im Wesentlichen darüber angeordneten Kühlergehäuseraum 75. Die beiden Kühlergehäuseräume 74, 75 sind innerhalb des Kühlergehäuses 73 fluiddicht über eine Trennwand 76 voneinander abgetrennt.

Über eine Eintrittsöffnung 77 steht der erste Kühlergehäuseraum 74 mit der Umgebung des Kühlermoduls 72 in Fluidverbindung. Die Eintrittsöffnung 77 entspricht, was ihre Größe und Anordnung angeht, der Austrittsöffnung 33 des Kühlermoduls 19 nach FIG 1. Über die Durchtrittsöffnung 24 steht der erste Kühlergehäuseraum 74 mit der zweiten Kühlfluid-Verbindungszone 23 in Fluidverbindung.

Über die Durchtrittsöffnung 22 steht ein in FIG 4 linker Abschnitt des zweiten Kühlergehäuseraums 75 mit der ersten Kühlfluid-Verbindungszone 20 des Maschinengehäuses 7 in Fluidverbindung. Über eine Austrittsöffnung 78 steht der zweite Kühlergehäuseraum 75 mit der Umgebung des Kühlermoduls 72 in Verbindung. Die Austrittsöffnung 78 entspricht, was ihre Größe und Anordnung angeht, der Eintrittsöffnung 32 des Kühlergehäuses 21 nach FIG 1.

Die Trennwand 76 weist einen ersten Trennwandabschnitt 79 auf, der an einem bodenseitigen Tragsteg des Kühlergehäuses 73 zwischen der Durchtrittsöffnung 22 und der Eintrittsöffnung 77 montiert ist und vom Boden aus steil ansteigt, sodass sich der zweite Kühlergehäuseraum 75 ausgehend von der Durchtrittsöffnung 22 zunächst stetig erweitert. An den ersten Trennwandabschnitt 79 schließt sich ein zweiter Trennwandabschnitt 80 der Trennwand 76 an. Dieser ist leicht abfallend im Kühlergehäuse 73 angeordnet, sodass sich der zweite Kühlergehäuseraum 75 ausgehend von der Verbindung zwischen den beiden Trennwandabschnitten 79, 80 bis hin zur Austrittsöffnung 78 stetig erweitert.

Abgesehen von den bodenseitigen Öffnungen 22, 24 und 77 ist der Boden des Kühlergehäuses 73 als fluidundurchlässige Platte ausgebildet. Insbesondere ist über der dritten Kühlfluid-Verbindungszone 25 des Maschinengehäuses 7 eine Dichtplatte 81 angeordnet. Letztere stellt eine Dichteinrichtung dar, welche die dritte Kühlfluid-Verbindungszone 25 derart abdichtet, dass durch diese Kühlfluid-Verbindungszone 25 kein Fluidaustausch zwischen dem Maschinenmodul 2 und dem Kühlermodul 72 erfolgt.

Eine einseitige, offene Luftkühlung des elektrischen Aggregats 1 mit dem Kühlermodul 72 funktioniert folgendermaßen:
Kühlluft wird über die Eintrittsöffnung 77 von außen in den ersten Kühlergehäuseraum 74 eingesaugt. Die Saugwirkung ergibt sich wiederum durch die Drehung des Rotors im Stator 4. Diese Saugwirkung kann alternativ durch einen Ventilator erzeugt oder unterstützt werden. Ein derartiger Ventilator ist in FIG 4 nicht dargestellt und kann z. B. als im ersten Randabschnitt 14 des Maschinengehäuses 7 angeordneter Radiallüfter gebildet sein. Alternativ kann auch ein Axiallüfter vorgesehen sein. Den Eintritt der Kühlluft in die Eintrittsöffnung 77 verdeutlicht ein Strömungsrichtungspfeil 82. Von der Eintrittsöffnung 77 strömt die Kühlluft zunächst durch den ersten Kühlergehäuseraum 74, wie durch einen Strömungsrichtungspfeil 83 angedeutet, und von dort durch die Durchtrittsöffnung 24 und die zweite Kühlfluid-Verbindungszone 23 in den zweiten Randabschnitt 15 des Maschinengehäuses 7, wie durch einen Strömungsrichtungspfeil 84 angedeutet. Anschließend strömt die Kühlluft in FIG 4 von rechts in den Elektromotor 3 ein und durchströmt die Durchgangsöffnungen und Durchgänge des Rotors einerseits sowie die Durchgangsöffnungen 5 und die Durchgänge 6 des Stators 4 andererseits, wie im Zusammenhang mit der Kühlluftströmung bei der Kühlung nach FIG 1 beschrieben. Da die Kühlluft nicht durch die dritte Kühlfluid-Verbindungszone 25 nach oben entweichen kann, durchströmt die Kühlluft den Elektromotor 3 axial vollständig in FIG 4 von rechts nach links, wie durch Strömungsrichtungspfeile 85, 86 und 87 angedeutet. Es handelt sich also um eine einseitige Kühlung des Elektromotors 3. Vom Mittelabschnitt 13 strömt die Kühlluft dann in den ersten Randabschnitt 14 des Maschinengehäuses 7 und von dort über die erste Kühlfluid-Verbindungszone 20 und die Durchtrittsöffnung 22 in den zweiten Kühlergehäuseraum 75 des Kühlergehäuses 73, wie durch einen Strömungsrichtungspfeil 88 angedeutet. Die erwärmte Kühlluft strömt sodann von der Durchtrittsöffnung 22 durch den sich stetig erweiternden zweiten Kühlergehäuseraum 75 vorbei am Übergang zwischen den Trennwandabschnitten 79, 80, wie durch einen Strömungsrichtungspfeil 89 angedeutet, hin zur Austrittsöffnung 78 und von dort aus dem Kühlergehäuse 73 heraus.

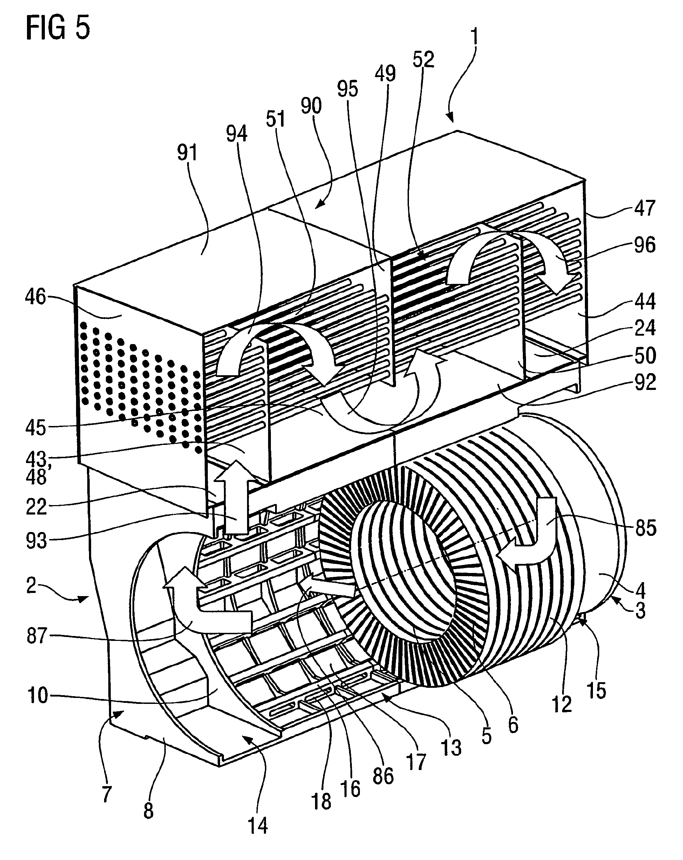

FIG 5 zeigt das elektrische Aggregat 1 mit einer vierten Variante eines Kühlermoduls 90, welches an das Maschinenmodul 2 montiert werden kann. Der Aufbau des Kühlermoduls 90 wird nachfolgend nur dort beschrieben, wo er sich vom Aufbau des Kühlermoduls 41 nach FIG 2 unterscheidet. Komponenten, die denjenigen entsprechen, die bereits unter Bezugnahme auf die FIG 1 bis 4 erläutert wurden, tragen die gleichen Bezugsziffern und werden nicht nochmals im Einzelnen diskutiert. Bei einem Kühlergehäuse 91 des Kühlermoduls 90 ist die Durchtrittsöffnung 27 nicht vorhanden, sondern durch eine Dichtplatte 92 verschlossen. Letztere stellt also eine Dichteinrichtung dar, welche die dritte Kühlfluid-Verbindungszone 25 des Maschinengehäuses 7 abdichtet, sodass durch die dritte Kühlfluid-Verbindungszone 25 kein Fluidaustausch zwischen dem Maschinenmodul 2 und dem Kühlermodul 90 erfolgt.

Ein einseitiger, geschlossener Kühlluft-Kreislauf für primäre Kühlluft hat beim Kühlermodul 90 folgenden Verlauf:
Der Kühlluftverlauf im Maschinengehäuse 7 entspricht bei der Ausführung des elektrischen Aggregats 1 nach FIG 5 demjenigen, der Ausführung nach FIG 4, wie durch die Strömungsrichtungspfeile 85, 86 und 87 angedeutet.

Über die erste Kühlfluid-Verbindungszone 20 und die Durchtrittsöffnung 22 tritt erwärmte Kühlluft dann in den in FIG 5 linken Randabschnitt 43 des Kühlergehäuses 91 ein. Im Randabschnitt 43 erfolgt ein erster Wärmeaustausch zwischen der erwärmten primären Kühlluft und der sekundären Kühlluft, die durch die Kühlluft-Röhren 51 des Luft-Wärmetauschers 52 des Kühlermoduls 90 strömt. Den Eintritt der erwärmten Kühlluft in den Randabschnitt 43 verdeutlicht ein Strömungsrichtungspfeil 93.

Anschließend überwindet die sich abkühlende Kühlluft die Tragwand 48, wie durch einen Strömungsrichtungspfeil 94 angedeutet, durchströmt den zweiten Kühlergehäuseabschnitt 45, wie durch einen Strömungsrichtungspfeil 95 angedeutet, und überwindet nachfolgend die Tragwand 50, wie durch einen Strömungsrichtungspfeil 96 angedeutet, wobei die nunmehr abgekühlte Kühlluft in den in FIG 5 rechten Randabschnitt 44 strömt. Sodann strömt die abgekühlte Kühlluft durch die Durchtrittsöffnung 24 und die zweite Kühlfluid-Verbindungszone 23 wiederum in das Maschinengehäuse 7, sodass der primäre Luftkreislauf geschlossen ist.

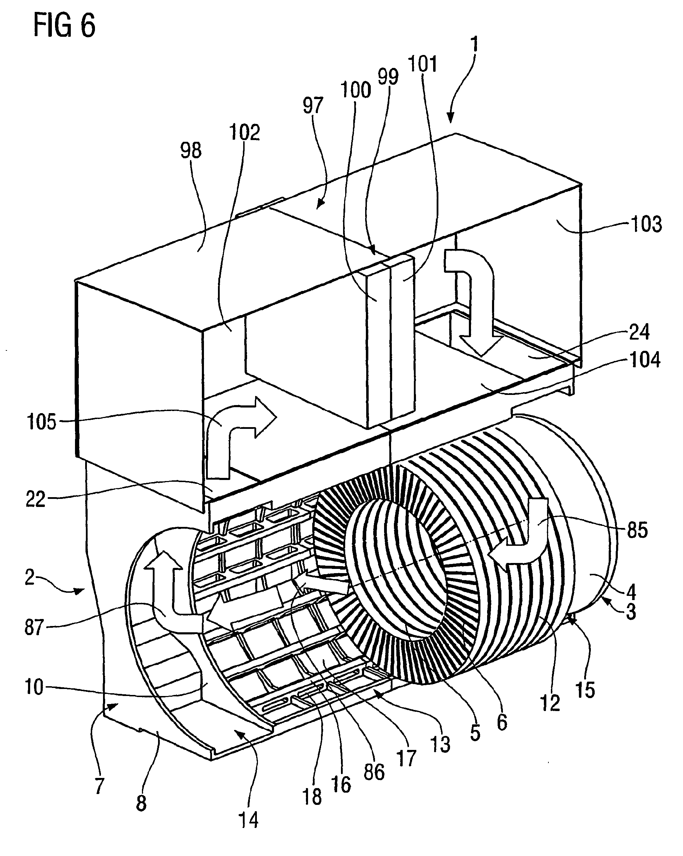

FIG 6 zeigt eine weitere Variante eines Kühlermoduls 97 zur Montage an das Maschinenmodul 2. Komponenten, die denjenigen entsprechen, die vorstehend schon unter Bezugnahme auf die FIG 1 bis 5 erläutert wurden, tragen die gleichen Bezugsziffern und werden nicht nochmals im Einzelnen diskutiert. In einem Kühlergehäuse 98 des Kühlermoduls 97 ist mittig parallel zu den in FIG 6 links und rechts dargestellten Stirnwänden des Kühlergehäuses 91 ein Luft-Wasser-Wärmetauscher 99 angeordnet. Letzterer hat zwei Lamellen-Module 100, 101. Die Lamellen der Lamellen-Module 100, 101 werden von Luft durchströmt. Diese Kühlluft steht ihrerseits in Wärmeaustausch mit Kühlwasser, welches durch Kühlwasserrohre strömt, die in den Lamellen-Modulen 100, 101 untergebracht sind. Diese Module weisen von Kühlwasser durchströmte Lamellen entsprechend den Lamellen des Wasser-Wärmetauschers 59 bei der Ausführung nach FIG 3 auf. Die Haupterstreckungsebene der Lamellen des Wasser-Wärmetauschers 99 entspricht dabei derjenigen des Wasser-Wärmetauschers 59. Prinzipiell kann anstelle des Wasser-Wärmetauschers 99 auch der Wasser-Wärmetauscher 59 der Ausführung nach FIG 3 verwendet werden.

Der Wasser-Wärmetauscher 99 unterteilt den Innenraum des Kühlergehäuses 98 in einen in FIG 6 links dargestellten ersten Kühlergehäuseabschnitt 102 und in einen in FIG 6 rechts dargestellten zweiten Kühlergehäuseabschnitt 103. Der erste Kühlergehäuseabschnitt 102 steht über die Durchtrittsöffnung 22 mit der ersten Kühlfluid-Verbindungszone 20 des Maschinengehäuses 7 in Fluidverbindung. Der zweite Kühlergehäuseabschnitt 103 steht über die Durchtrittsöffnung 24 mit der zweiten Kühlfluid-Verbindungszone 22 des Maschinengehäuses 7 in Fluidverbindung. Eine Fluidverbindung zwischen den beiden Kühlergehäuseabschnitten 102, 103 ist über den Wasser-Wärmetauscher 99 gegeben.

Bodenseitig weist das Kühlergehäuse 91 des Kühlermoduls 90 zwischen den Durchtrittsöffnungen 22 und 24 eine Dichtplatte 104 auf. Letztere stellte eine Dichteinrichtung dar, die die dritte Kühlfluid-Verbindungszone 25 des Maschinengehäuses 7 abdichtet, sodass durch die dritte Kühlfluid-Verbindungszone 25 kein Fluidaustausch zwischen dem Maschinenmodul 2 und dem Kühlermodul 97 erfolgt.

Eine einseitige, Luft-Wasser-Kreislaufkühlung erfolgt mit dem Kühlermodul 97 beim elektrischen Aggregat 1 nach FIG 6 folgendermaßen:
Die Luftströmung im Maschinengehäuse 7 entspricht bei der Ausführung nach FIG 6 derjenigen der Ausführung nach den FIG 4 und 5, wie durch die Strömungsrichtungspfeile 85, 86 und 87 angedeutet. Aus dem ersten Randabschnitt 14 tritt die erwärmte Kühlluft über die erste Kühlfluid-Verbindungszone 20 und die Durchtrittsöffnung 22 in den ersten Kühlergehäuseabschnitt 102 ein, wie durch einen Strömungsrichtungspfeil 105 verdeutlicht. Vom ersten Kühlergehäuseabschnitt 102 aus durchtritt die Kühlluft den Wasser-Wärmetauscher 99, wobei sie durch Wärmeaustausch mit der Kühlluft und dem Wasser, welches die Lamellen-Module 100, 101 durchströmt, abgekühlt wird. Anschließend strömt die abgekühlte Kühlluft vom zweiten Kühlergehäuseabschnitt 103 durch die Durchtrittsöffnung 24 und die zweite Kühlfluid-Verbindungszone 23 wieder in den zweiten Randabschnitt 15 des Maschinengehäuses 7 ein. Der Kühlkreislauf der primären Kühlluft ist somit komplett.

Die verschiedenen Varianten von Kühlermodulen 19, 41, 58, 72, 90, 97 stellen ein Set aus Kühlermodulen dar, wobei wahlweise ein Kühlermodul 19, 41, 58, 72, 90, 97 aus diesem Set je nach den Kühlanforderungen bzw. den bereitgestellten Gegebenheiten an das Maschinenmodul 2, welches gehäuseseitig immer identisch aufgeführt ist, montiert werden kann.

Soweit bei den vorstehend beschriebenen primären Kühlluft-Führungen eine Durchtrittsöffnung zur Verbindung nach außen vorhanden ist, kann diese so ausgeführt sein, dass sie gegen ein Eindringen von Wasser und Staub geschützt ist.

Alternativ oder zusätzlich zu den Durchtrittsöffnungen 18 in den Stegen 16 kann eine tangentiale Strömung von Kühlfluid zwischen dem Statormantel 12 und der Gehäusewand 17 erreicht werden, indem die Stege 16 so geformt sind, dass der Statormantel 12 nur abschnittsweise an diesen anliegt, sodass sich zwischen dem Statormantel 12 und den Stegen 16 Zwischenräume zur tangentialen Durchströmung ergeben.

## Patentansprüche

1. Set aus einer Mehrzahl von Kühlermodulen (19;41;58;72;90; 97) und einem Maschinengehäuse (7), wobei das Maschinengehäuse (7) mit jedem der Kühlermodule (19;41;58;72;90; 97) zusammenbaubar ist, wobei jedes Kühlermodul (19;41;58;72;90; 97) ein Kühlergehäuse (21;42;62;73;91;98) umfasst, das über
- eine erste Kühlfluid-Verbindungszone (20) in einer Gehäusewand (17) eines Maschinengehäuses (7) und
- mindestens eine zweite Kühlfluid-Verbindungszone (23) in der Gehäusewand (17) des Maschinengehäuses (7)
mit dem Inneren des Maschinengehäuses (7) in Fluidverbindung bringbar ist,
wobei das Innere des Maschinengehäuses (7) in einem Abschnitt der Gehäusewand (17), welcher dem Kühlergehäuse (21;42;62;73;91;98) zugewandt ist, über mindestens eine dritte Kühlfluid-Verbindungszone (25) mit mindestens einer Kühlfluid-Durchtrittsöffnung (26) mit dem Inneren des Kühlergehäuses (21;42;62;73;91;98) in Fluidverbindung bringbar ist, wobei das Maschinengehäuse (7) eine elektrische Maschine(3) derart aufnehmen kann, dass eine axiale Kühlfluid-Strömung zwischen einem Statormantel (12) der elektrischen Maschine (3) und der Gehäusewand (17) gegeben ist und eine den Statormantel (12) umlaufende Kühlfluid-Strömung zwischen dem Statormantel (12) und der Gehäusewand (17) gegeben ist, wobei die Gehäusewand (17) parallel zur Statorachse innen verlaufende Stege (16) zur zumindest abschnittsweise Anlage an dem Statormantel (12) aufweist und die bei montiertem Stator (4) Durchtrittsöffnungen (18) zur umlaufenden Kühlfluid-Strömung freigeben, wobei die Mehrzahl von Kühlermodulen (19;41;58;72;90; 97) mindestens zwei Kühlermodule (19;41;58;72;90;97) aus folgenden Kühlermodul-Varianten umfasst:
- eine erste Kühlermodul-Variante (19)
-- mit einem ersten Kühlergehäuseraum (28), welcher über mindestens eine Eintrittsöffnung (31, 32) mit der Umgebung in Fluidverbindung steht und über entsprechende Durchtrittsöffnungen (22, 24) mit der ersten (20) und der zweiten (23) Kühlfluid-Verbindungszone in Fluidverbindung steht,
-- mit einem fluiddicht vom ersten Kühlergehäuseraum (28) abgetrennten zweiten Kühlergehäuseraum (29), welcher über mindestens eine Durchtrittsöffnung (27) mit der dritten Kühlfluid-Verbindungszone (25) in Fluidverbindung steht und über eine Austrittsöffnung (33) mit der Umgebung in Fluidverbindung steht,
- eine zweite Kühlermodul-Variante (41; 58)
-- mit einem ersten Kühlergehäuseabschnitt (43, 44), welcher über entsprechende Durchtrittsöffnungen (22, 24) mit der ersten (20) und der zweiten (23) Kühlfluid-Verbindungszone in Fluidverbindung steht,
-- mit einem in Fluidverbindung mit dem ersten Kühlergehäuseabschnitt (43, 44) stehenden zweiten Kühlergehäuseabschnitt (45; 67), welcher über mindestens eine Durchtrittsöffnung (27) mit der dritten Kühlfluid-Verbindungszone (25) in Fluidverbindung steht,
-- mit einem Wärmetauscher (52; 59), der mit den beiden Kühlergehäuseabschnitten (43, 44) in Wärmekontakt steht,
- eine dritte Kühlermodul-Variante (72)
-- mit einem ersten Kühlergehäuseraum (74), welcher über mindestens eine Eintrittsöffnung (77) mit der Umgebung in Fluidverbindung steht und über mindestens eine Durchtrittsöffnung (24) mit der zweiten Kühlfluid-Verbindungszone (23) in Fluidverbindung steht,
-- mit einem fluiddicht vom ersten Kühlergehäuseraum (74) abgetrennten zweiten Kühlergehäuseraum (75), welcher über mindestens eine Durchtrittsöffnung (22) mit der ersten Kühlfluid-Verbindungszone (20) in Fluidverbindung steht und über mindestens eine Austrittsöffnung (78) mit der Umgebung in Fluidverbindung steht,
-- mit einer Dichteinrichtung (81), welche die dritte Kühlfluid-Verbindungszone (25) abdichtet, sodass durch die dritte Kühlfluid-Verbindungszone (25) kein Kühlfluidaustausch zwischen dem Maschinengehäuse (7) und dem Kühlermodul (72) erfolgen kann,
- eine vierte Kühlermodul-Variante (90; 97)
-- mit einem ersten Kühlergehäuseabschnitt (43; 102), welcher über mindestens eine Durchtrittsöffnung (22) mit der ersten Kühlfluid-Verbindungszone (20) in Fluidverbindung steht,
-- mit einem in Fluidverbindung mit dem ersten Kühlergehäuseabschnitt (43; 102) stehenden zweiten Kühlergehäuseabschnitt (44; 103), welcher über mindestens eine Durchtrittsöffnung (24) mit der zweiten Kühlfluid-Verbindungszone (23) in Fluidverbindung steht,
-- mit einem Wärmetauscher (52; 99), der mit den beiden Kühlergehäuseabschnitten (43, 44; 102, 103) in Wärmekontakt steht,
-- mit einer Dichteinrichtung (92; 104), welche die dritte Kühlfluid-Verbindungszone (25) abdichtet, sodass durch die dritte Kühlfluid-Verbindungszone (25) kein Kühlfluidaustausch zwischen dem Maschinengehause (7) und dem Kühlermodul (90; 97) erfolgen kann.

2. Set nach Anspruch 1, **dadurch** g e - kennzeichnet, dass die Durchtrittsöffnungen (18) in den Stegen (16) ausgeführt sind.

3. Set nach einem der Ansprüche 1 bis 2, **gekennzeichnet durch** mindestens einen Axial- oder Radiallüfter im Kühlergehäuse (21; 42; 62; 73; 91; 98) und/oder im Maschinengehäuse (7) zur Vorgabe einer Luft-Strömungsrichtung.

4. Set nach Anspruch 1, **dadurch gekennzeichnet, dass** jeweils mindestens ein Kühlermodul (41; 90) der zweiten und vierten Kühlermodul-Variante vorgesehen ist, wobei das Kühlergehäuse (91) der vierten Kühlermodul-Variante (90), abgesehen von der zusätzlichen Dichteinrichtung (92), identisch zum Kühlergehäuse (42) der zweiten Kühlermodul-Variante (41) ausgebildet ist.

5. Set nach Anspruch 1 oder 4, **dadurch gekennzeichnet, dass** der Wärmetauscher (52) bei der zweiten (41) oder vierten (90) Kühlermodul-Variante als Gas-Gas-Wärmetauscher, insbesondere als Luft-Luft-Wärmetauscher ausgebildet ist.

6. Set nach Anspruch 1 oder 4, **dadurch gekennzeichnet, dass** der Wärmetauscher (59 ; 99) bei der zweiten (58) oder vierten (97) Kühlermodul-Variante als Gas-Flüssigkeits-Wärmetauscher, insbesondere als Luft-Wasser-Wärmetauscher ausgebildet ist.

## Claims

1. Set comprising a plurality of cooler modules (19; 41; 58; 72; 90; 97) and a machine housing (7), wherein the machine housing (7) can be assembled with each of the cooler modules (19; 41; 58; 72; 90; 97), wherein each cooler module (19; 41; 58; 72; 90; 97) comprises a cooler housing (21; 42; 62; 73; 91; 98), which can be connected for fluid flow purposes to the interior of the machine housing (7) via
- a first cooling fluid connection zone (20) in a housing wall (17) of a machine housing (7), and,
- at least one second cooling fluid connection zone (23) in the housing wall (17) of the machine housing (7),
wherein the interior of the machine housing (7) can be connected for fluid flow purposes, in a section of the housing wall (17) which faces the cooler housing (21; 42; 62; 73; 91; 98), via at least one third cooling fluid connection zone (25) by means of at least one cooling fluid aperture opening (26) to the interior of the cooler housing (21; 42; 62; 73; 91; 98), wherein the machine housing (7) can hold an electrical machine (3) in such a manner that an axial cooling fluid flow is produced between a stator casing (12) of the electrical machine (3) and the housing wall (17) and a cooling fluid flow which surrounds the stator casing (12) is produced between the stator casing (12) and the housing wall (17), wherein the housing wall (17) has webs (16) which run internally parallel to the stator axis and serve for resting on the stator casing (12) at least in places and which release aperture openings (18) for circulating cooling fluid flow when the stator (4) is fitted, wherein the plurality of cooler modules (19; 41; 58; 72; 90; 97) comprise at least two cooler modules (19; 41; 58; 72; 90; 97) from the following cooler module variants:
- a first cooler module variant (19)
-- having a first cooler housing area (28) which is connected for fluid flow purposes via at least one inlet opening (31, 32) to the surrounding area, and is connected for fluid flow purposes via corresponding aperture openings (22, 24) to the first (20) and to the second (23) cooling fluid connection zone,
-- having a second cooler housing area (29) which is separated in a fluid-tight manner from the first cooler housing area (28), is connected for fluid flow purposes via at least one aperture opening (27) to the third cooling fluid connection zone (25) and is connected for fluid flow purposes via an outlet opening (33) to the surrounding area,
- a second cooler module variant (41; 58)
-- having a first cooler housing section (43, 44) which is connected for fluid flow purposes via corresponding aperture openings (22, 24) to the first (20) and to the second (23) cooling fluid connection zone,
-- having a second cooler housing section (45; 67) which is connected for fluid flow purposes to the first cooler housing section (43, 44) and is connected for fluid flow purposes via at least one aperture opening (27) to the third cooling fluid connection zone (25),
-- having a heat exchanger (52; 59), which makes thermal contact with the two cooler housing sections (43, 44),
- a third cooler module variant (72)
-- having a first cooler housing area (74) which is connected for fluid flow purposes via at least one inlet opening (77) to the surrounding area, and is connected for fluid flow purposes via at least one aperture opening (24) to the second cooling fluid connection zone (23),
-- having a second cooling housing area (75) which is separated in a fluid-tight manner from the first cooling housing area (74) is connected for fluid flow purposes via at least one aperture opening (22) to the first cooling fluid connection zone (20) and is connected for fluid flow purposes via at least one outlet opening (78) to the surrounding area,
-- having a sealing device (81) which seals the third cooling fluid connection zone (25) such that no cooling fluid can be exchanged between the machine housing (7) and the cooler module (72),
- a fourth cooler module variant (90; 97)
-- having a first cooler housing area (43; 102) which is connected for fluid flow purposes via at least one aperture opening (22) to the first cooling fluid connection zone (20),
-- having a second cooler housing section (44; 103) which is connected for fluid flow purposes to the first cooler housing section (43; 102) and is connected for fluid flow purposes via at least one aperture opening (24) to the second cooling fluid connection zone (23),
-- having a heat exchanger (52; 99) which makes thermal contact with the two cooler housing sections (43, 44; 102, 103),
-- having a sealing device (92; 104), which seals the third cooling fluid connection zone (25) such that no cooling fluid can be exchanged between the machine housing (7) and the cooler module (90; 97) through the third cooling fluid connection zone (25).

2. Set according to Claim 1, **characterized in that** the aperture openings (18) are formed in the webs (16).

3. Set according to one of Claims 1 to 2, **characterized by** at least one axial or radial fan in the cooler housing (21; 42; 62; 73; 91; 98) and/or in the machine housing (7) in order to preset an air flow direction.

4. Set according to Claim 1, **characterized in that** at least one cooler module (41; 90) of the second and fourth cooler module variant is in each case provided, with the cooler housing (91) of the fourth cooler module variant (90) being identical to the cooler housing (42) of the second cooler module variant (41), apart from the additional sealing device (92).

5. Set according to Claim 1 or 4, **characterized in that** the heat exchanger (52) for the second (41) or fourth (90) cooler module variant is a gas-gas heat exchanger, in particular an air-air heat exchanger.

6. Set according to Claim 1 or 4, **characterized in that** the heat exchanger (52; 99) for the second (58) or fourth (97) cooler module variant is a gas-liquid heat exchanger, in particular an air-water heat exchanger.

## Revendications

1. Jeu composé d'une multiplicité de modules ( 19; 41; 58; 72; 90; 97 ) de refroidisseur et d'une enveloppe ( 7 ) de machine, 1"enveloppe (7) de machine pouvant être montée avec chacun des modules ( 19; 41; 58; 72; 90; 97 ) de refroidisseur, dans lequel chaque module ( 19; 41; 58; 72; 90; 97 ) de refroidisseur comporte une enveloppe ( 21; 42; 62; 73; 91; 98) de refroidisseur, qui
- par une première zone ( 20 ) de liaison de fluide de refroidissement dans une paroi ( 17 ) d'enveloppe d'une enveloppe ( 7 ) de machine et
- par au moins une deuxième zone ( 23 ) de liaison de fluide de refroidissement dans la paroi ( 17 ) d'enveloppe de l'enveloppe ( 7 ) de machine,
peut être mise en liaison fluidique avec l'intérieur de l'enveloppe ( 7 ) de machine,
dans lequel l'intérieur de l'enveloppe ( 7 ) de la machine peut, dans une partie de la paroi ( 17 ) de l'enveloppe, qui est tournée vers l'enveloppe ( 21; 42; 62; 73; 91; 98 ) du refroidisseur, être mise en liaison fluidique par au moins une troisième zone ( 25 ) de liaison de fluide de refroidissement ayant au moins une ouverture ( 26 ) de passage du fluide de refroidissement, avec l'intérieur de l'enveloppe ( 21; 42; 62; 73; 91; 98 ) du refroidisseur, dans lequel l'enveloppe ( 7 ) de la machine peut recevoir une machine ( 3 ) électrique, de manière à avoir un écoulement axial du fluide de refroidissement entre une surface latérale ( 12 ) du stator de la machine électrique et la paroi ( 17 ) de l'enveloppe et un courant de fluide de refroidissement faisant le tour de la surface latérale ( 12 ) du stator entre la surface latérale ( 12 ) du stator et la paroi ( 17 ) de l'enveloppe, dans lequel la paroi ( 17 ) a, parallèlement à l'axe du stator, des nervures ( 16 ) qui s' étendent à l'intérieur, auxquelles la surface latérale ( 12 ) du stator s' applique au moins par partie, et qui, lorsque le stator ( 4 ) est monté, dégagent des ouvertures ( 18 ) de passage pour le courant du fluide de refroidissement faisant le tour, la multiplicité de modules ( 19; 41; 58; 72; 90; 97 ) de refroidisseur ayant au moins deux modules ( 19; 41; 58; 72; 90; 97 ) de refroidisseur composés de variantes de modules de refroidisseur suivante
- une première variante ( 19 ) de module de refroidisseur
-- ayant un premier espace ( 28 ) d'enveloppe de refroidisseur, qui est par au moins une ouverture ( 31, 32 ) d'entrée en liaison fluidique avec l'extérieur et qui est par des ouvertures ( 22, 24 ) de passage correspondantes en liaison fluidique avec la première ( 20 ) et avec la deuxième ( 23 ) zones de liaison de fluide de refroidissement,
-- ayant un deuxième espace ( 29 ) d'enveloppe de refroidisseur, qui est séparé d'une manière étanche au fluide du premier espace ( 28 ) de l'enveloppe de refroidisseur et qui est par au moins une ouverture ( 27 ) de passage en liaison fluidique avec la troisième zone de liaison de fluide de refroidissement et par une ouverture ( 33 ) de sortie en liaison fluidique avec l'extérieur,
- une deuxième variante ( 41; 58 ) de module de refroidisseur
-- ayant une première partie ( 43, 44 ) d'enveloppe de refroidisseur, qui est par des ouvertures ( 22, 24 ) de passage correspondantes en liaison fluidique avec la première ( 20 ) et avec la deuxième ( 23 ) zones de liaison de fluide de refroidissement,
-- ayant une deuxième partie ( 45; 67 ) de l'enveloppe de refroidisseur, qui est en liaison fluidique avec la première partie ( 43, 44 ) de l'enveloppe de refroidisseur et qui est par au moins une ouverture ( 27 ) de passage en liaison fluidique avec la troisième zone ( 25 ) de liaison de fluide de refroidissement,
-- ayant un échangeur de chaleur ( 52; 59 ), qui est en contact thermique avec les deux parties ( 43, 44 ) de l'enveloppe de refroidisseur,
- une troisième variante ( 72 ) de module de refroidisseur
-- ayant un premier espace ( 74 ) d'enveloppe de refroidisseur, qui est par au moins une ouverture ( 77 ) d'entrée en liaison fluidique avec l'extérieur et par au moins une ouverture ( 24 ) de passage en liaison fluidique avec la deuxième zone ( 23 ) de liaison de fluide de refroidissement,
-- ayant un deuxième espace ( 75 ) d'enveloppe de refroidisseur, qui est séparé d'une manière étanche au fluide du premier espace ( 74 ) de l'enveloppe de refroidisseur, qui est par au moins une ouverture ( 22 ) de passage en liaison fluidique avec la première zone ( 20 ) de liaison de fluide de refroidissement et qui est par au moins une ouverture ( 78 ) de sortie en liaison fluidique avec l'extérieur,
-- ayant un dispositif ( 81 ) d'étanchéité, qui rend étanche la troisième zone ( 25 ) de liaison de fluide de refroidissement, de manière à ce qu' il ne puisse y avoir par la troisième zone ( 25 ) de liaison de fluide de refroidissement d'échange de fluide de refroidissement entre l'enveloppe ( 7 ) de machine et le module ( 72 ) de refroidisseur,
- une quatrième variante ( 90; 97 ) de module de refroidisseur
-- ayant une première partie ( 43; 102 ) de l'enveloppe de refroidisseur, qui est par au moins une ouverture ( 22 ) de passage en liaison fluidique avec la première zone ( 20 ) de liaison de fluide de refroidissement,
-- ayant une deuxième partie ( 44; 103 ) de l'enveloppe de refroidisseur, qui est en liaison fluidique avec la première partie ( 44; 102 ) de l'enveloppe de refroidisseur et qui est par au moins une ouverture ( 24 ) de passage en liaison fluidique avec la deuxième zone ( 23 ) de liaison de fluide de refroidissement,
-- ayant un échangeur de chaleur ( 52; 99 ), qui est en contact thermique avec les deux parties ( 43, 44; 102, 103 ) de l'enveloppe de refroidisseur,
-- ayant un dispositif ( 92; 104 ) d'étanchéité, qui rend étanche la troisième zone ( 25 ) de liaison de fluide de refroidissement de manière à ce qu' il ne puisse y avoir par la troisième zone ( 25 ) de liaison de fluide de refroidissement d'échange de fluide de refroidissement entre l'enveloppe ( 7 ) de machine et le module ( 90; 97 ) de refroidisseur.

2. Jeu suivant la revendication 1, **caractérisé en ce que** les ouvertures ( 18 ) de passage sont réalisées dans les nervures ( 16 ).

3. Jeu suivant l'une des revendications 1 à 2, **caractérisé par** au moins un ventilateur axial ou radial dans l'enveloppe ( 21; 42; 62; 73; 91; 98 ) du refroidisseur et/ou dans l'enveloppe ( 7 ) de la machine pour la prescription d'un sens d'écoulement de l'air.

4. Jeu suivant la revendication 1, **caractérisé en ce qu'** il est prévu respectivement au moins un module ( 41; 90 ) de refroidisseur de la deuxième et de la quatrième variantes de module de refroidisseur, l'enveloppe ( 91 ) du refroidisseur de la quatrième variante ( 90 ) de module de refroidisseur étant, indépendamment du dispositif ( 92 ) d'étanchéité supplémentaire, constituée de manière identique à l'enveloppe ( 42 ) du refroidisseur de la deuxième variante ( 41 ) du module de refroidisseur.

5. Jeu suivant la revendication 1 ou 4, **caractérisé en ce que** l'échangeur de chaleur ( 52 ) est, dans la deuxième ( 41 ) ou la quatrième ( 90 ) variante de module de refroidisseur, constitué en échangeur de chaleur gaz/gaz, notamment en échangeur de chaleur air-air.

6. Jeu suivant la revendication 1 ou 4, **caractérisé en ce que** l'échangeur de chaleur ( 59; 99 ) est, dans la deuxième ( 58 ) ou dans la quatrième ( 97 ) variante de module de refroidisseur, constitué en échangeur de chaleur gaz-liquide, notamment en échangeur de chaleur air-eau.
